# EUROPEAN PATENT APPLICATION

(11) **EP 4 722 026 A1**
(43) Date of publication of application: **08.04.2026**
(21) Application number: 25206871.3
(22) Date of filing: 06.10.2025
(51) Int. Cl.: B60L 53/16, B60K 1/04, B60K 15/05

(54) **IMPACT ABSORPTION SYSTEMS FOR CHARGER PORT**

(30) Priority: 07.10.2024 US 202463704417 P; 03.10.2025 US 202519349673
(71) Applicant: Daimler Truck North America LLC, Portland, Oregon 97217 (US)
(72) Inventor: PAWN, Prashanth, 560066 Bangalore (IN); PANDYA, Pankaj, 560066 Bangalore (IN)
(74) Representative: impuls legal PartG mbB

(57) **Abstract**

Impact absorption systems (30, 60) for a charger port (29) are described herein. In aspects, the impact absorption system (30, 60) includes a top cover portion (26) having a first side and a second side and an impact absorption mechanism (31, 61) coupled to the first side of the top cover portion (26). The top cover portion (26) is configured to cover at least a first part of the charger port (29). The top cover portion (26) and the impact absorption mechanism (31, 61) are configured to shift at least partially in a first direction in response to a load applied to the second side of the top cover portion (26). The impact absorption systems (30, 60) disclosed herein can help absorb, dissipate, and/or distribute loads caused by an operator stepping on the cover of the charger port, thus helping to reduce degradation of enclosed components.

## Description

### CROSS REFERENCE

The present application claims the priority to and benefit of U.S. Application Nos. 63/704,417, filed on October 7, 2024 and 19/349,673, filed on October 3, 2025. The aforementioned patent applications are hereby incorporated by reference herein in their entireties.

### FIELD

The field relates to impact absorption systems for vehicle components.

### BACKGROUND

Vehicles that operate with electric motors and battery-electric power include a charging unit that is coupled to an external charging device for charging the battery system. For larger vehicles, e.g., freight trucks, the charging unit is typically located near the cabin and the battery system is typically located under, and supported by, the chassis. The charging unit is coupled to the external charging device via a charger port that can be located on the side of the vehicle and that is often enclosed with a cover.

### SUMMARY

This summary is intended to introduce a selection of concepts in a simplified form that are further described below in the detailed description section of this disclosure. This summary is not intended to identify key or essential features of the claimed subject matter, nor is it intended to be used as an aid in isolation to determine the scope of the claimed subject matter.

In brief, and at a high level, this disclosure describes, among other things, impact absorption systems for charger ports, e.g., those used in connection with vehicles or other mobile platforms, vehicles having the same, and methods of manufacturing and installing the same. The impact absorption systems disclosed herein can be integrated into electric-powered vehicles and other types of mobile platforms and can help absorb, dissipate, and/or distribute loads, e.g., those caused by an operator stepping on a cover of a charger port. This, in turn, can help reduce the degradation of the cover, the charger port, and/or the charging unit, which can reduce the frequency of costly maintenance on the charger port and charging unit. The aspects described herein can therefore increase the operational lifecycle of charging-related components and increase the stability provided by such structures, e.g., on an associated vehicle.

In aspects, an impact absorption system for a charger port is provided. The impact absorption system includes a top cover portion having a first side and a second side. The top cover portion is configured to cover at least a first part of the charger port. The impact absorption system further includes an impact absorption mechanism coupled to the second side of the top cover portion. The top cover portion and the impact absorption mechanism are configured to move at least partially in a first direction and to absorb, dissipate, and/or distribute at least a portion of a load applied to the top cover portion.

In aspects, a cover for a charger port is provided. The cover includes a top cover portion and a second portion comprising a frame structure and a door. The top cover portion and the second portion are configured to cover parts of the charger port. The cover further includes an impact absorption mechanism coupled to a first side of the top cover portion. The top cover portion and the impact absorption mechanism are configured to move at least partially in a first direction and to absorb, dissipate, and/or distribute at least a portion of a load applied to a second side of the top cover portion.

In aspects, a vehicle that includes the impact absorption systems for a charger port as described herein are provided. In some aspects, the vehicle includes a chassis, a battery system attached to the chassis, and a charging unit coupled to the battery system. The vehicle can also include a cover comprising a top cover portion and the impact absorption systems as described herein.

### BRIEF DESCRIPTION OF THE DRAWINGS

Impact absorption systems and methods of manufacturing, integrating, and using the same are described in detail herein in connection with the attached drawing figures, which illustrate non-limiting examples of the present subject matter, wherein:
FIG. 1 is a perspective view of a portion of a vehicle including an impact absorption system, in accordance with aspects of the present disclosure;
FIG. 2 is a perspective view of a cover of a charger port, in accordance with aspects of the present disclosure;
FIG. 3 is a perspective view of an impact absorption system, in accordance with aspects of the present disclosure;
FIG. 4 is a perspective view of components of the impact absorption system of FIG. 3, in accordance with aspects of the present disclosure;
FIGS. 5A and 5B are side views of a top cover portion of an impact absorption system at various positions, in accordance with aspects of the present disclosure;
FIG. 6 is a perspective view of another impact absorption system, in accordance with aspects of the present disclosure;
FIG. 7 is a perspective view of components of the impact absorption system of FIG. 6, in accordance with aspects of the present disclosure;
FIG. 8 is a perspective view of another impact absorption system, in accordance with aspects of the present disclosure; and
FIG. 9 is a perspective view of components of the impact absorption system of FIG. 8, in accordance with aspects of the present disclosure.

### DETAILED DESCRIPTION

This detailed description is provided in order to meet statutory requirements. However, this description is not intended to limit the scope of the disclosure described herein. Rather, the claimed subject matter may be embodied in different ways, to include different steps, different combinations of steps, different elements, and/or different combinations of elements, similar to those described in this disclosure, and in conjunction with other present or future technologies. Moreover, although the terms "step" and "block" may be used herein to identify different elements of methods employed, the terms should not be interpreted as implying any particular order among or between different elements except when the order is explicitly stated.

In an electrically-propelled vehicle, a charger port and a cover for the charger port are often close to steps of a cabin based on the location of the charging unit and the location of the battery system. Due to the proximity of the charger port and the cover to the steps of the cabin, the cover of the charger port may frequently be stepped on or support the weight of operators (e.g., a driver or other person hooking up a trailer) getting into or out of the cabin or attaching or detaching a trailer to the freight tractor. Because an operator may step on the cover of the charger port, the cover and brackets supporting the cover can over time be degraded which in turn can also cause the charger port and the charging unit to become degraded. Thus, configuring the charger port and an associated cover for improved impact-absorption and durability can help increase the operational lifespan of the cover and charger port and help reduce or limit maintenance costs and operation downtime due to servicing, among other benefits.

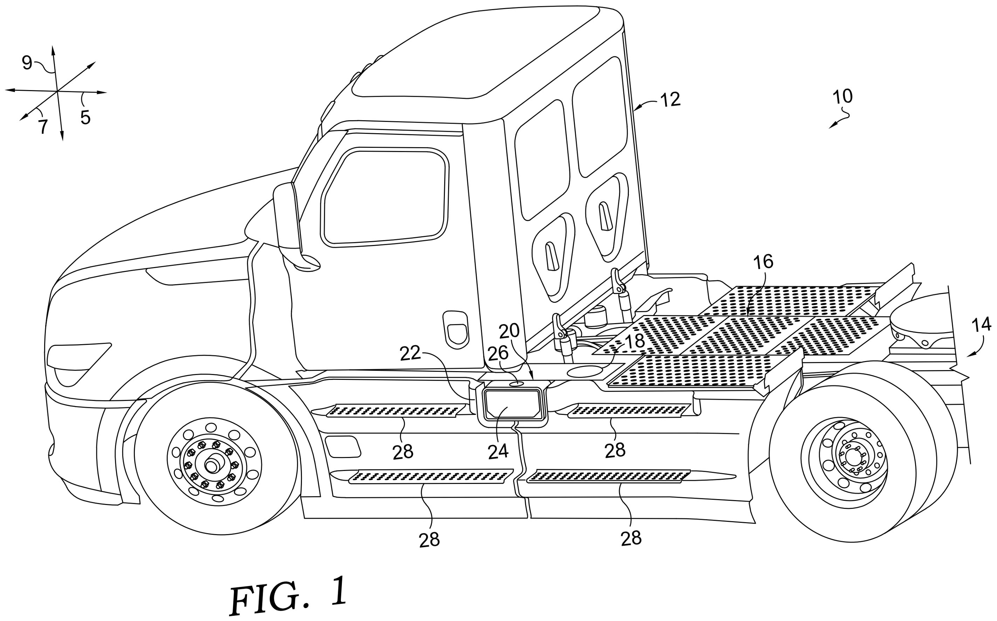

In general, and at a high level, this disclosure describes, among other things, impact absorption systems and methods of manufacturing, integrating, and using the same, e.g., in connection with vehicles and other mobile platforms. The impact absorption systems disclosed herein can help reduce exposure of certain components, e.g., charger ports and charging units, to impact loads, e.g., such as when an operator steps on a cover of the charger port. The impact absorption systems disclosed herein can help absorb, dissipate, and/or distribute loads caused by an operator stepping on the cover of the charger port, thus helping to reduce degradation of enclosed components. Example aspects that realize these benefits are described below in connection with attached FIGS. 1-9.

Referring to FIG. 1, a vehicle 10 is shown, in accordance with aspects of the present disclosure. The vehicle 10 includes a longitudinal axis 5, a transverse axis 7, and a vertical axis 9, as identified in FIG. 1. In the aspect of FIG. 1, the vehicle 10 is a freight tractor, e.g., one that can be attached to, and pull, a freight trailer. In addition, in the aspect of FIG. 1, the vehicle 10 is an electric vehicle, e.g., is powered using an electric powertrain, e.g., one that operates using electric motors and battery-electric power. The vehicle 10 may also include but is not limited to a passenger car, a bus, an off-road vehicle, a marine vessel, an aircraft, etc. To power the electric powertrain, the vehicle 10 includes a battery system 16 that is supported by, and is at least partially under, a chassis 14. The chassis 14 can include a pair of elongated and substantially parallel frame rails that are connected by transverse frame rails. The battery system 16 is supported by the chassis 14, or in other words, the battery system 16 hangs or is at least partially suspended under the chassis 14 in an example.

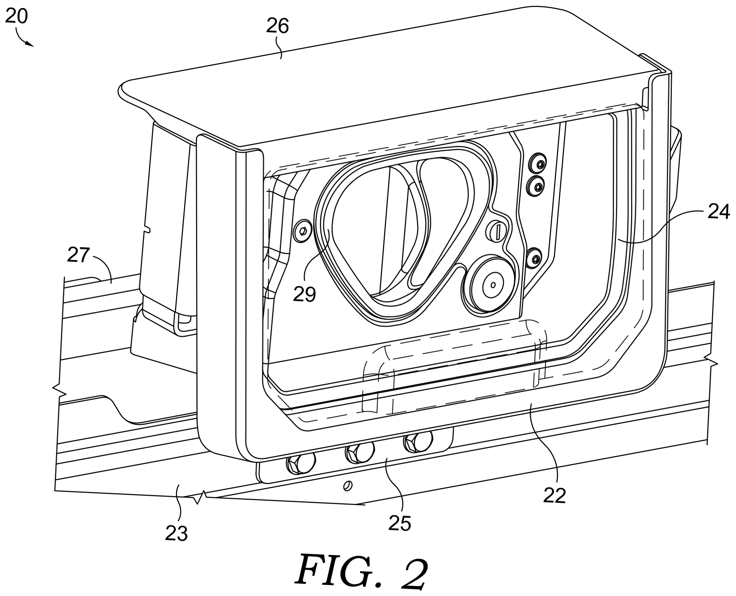

The vehicle 10 also includes a charging unit 18 attached to the battery system 16 and to a charger port 29 (shown in FIG. 2) configured to receive at least a portion of a charging device. In the example shown in FIG. 1, a view of the charger port 29 is obstructed by a cover 20, which encloses the charger port 29, e.g., to limit its exposure to weather, debris, and impact forces, among other things. The cover 20 includes a door 24, a front cover portion 22 that provides a frame structure for the door 24, and an impact absorption system, which includes a top cover portion 26 that covers the top of the charger port 29 and an impact absorption mechanism coupled to the top cover portion 26. Suitable examples of the frame structure provided by the front cover portion 22 include, but are not limited to, a rigid or semi-rigid assembly of metal, plastic, or composite members, such as a rectangular or contoured frame, bracket assembly, or support housing, configured to support and retain the door 24 and other components of the cover 20. Suitable examples of the door 24 include, but are not limited to, any movable barrier, such as a hinged, sliding, or removable panel, flap, or cover, that is configured to selectively provide access to the charger port 29 or other enclosed components of the cover 20. The impact absorption system is configured to help absorb, dissipate, distribute, and/or redirect impact forces on the cover 20, and in particular those oriented at least partially in the vertical direction (e.g., vertical axis 9, as identified in FIG. 1). As shown in FIG. 1, the cover 20 is closely proximate to steps 28 of the vehicle 10, e.g., that can be used by operators to enter the cabin 12 or access the back of the cabin 12, e.g., when attaching a freight trailer. It should be understood that the vehicle 10 can also include a single step 28 or a greater number of steps, e.g., to enter the cabin 12, depending on the design.

While FIG. 1 shows a freight tractor, it should be understood that the impact absorption systems that are disclosed herein may be applicable to a range of vehicle sizes, classes, and types. For example, other types of vehicles are contemplated herein including cars, trucks, trams, trains, boats, aircraft, construction equipment, farming machinery, other equipment, and the like.

FIG. 2 shows an isolated perspective view of the cover 20 for clarity and explanation purposes, in accordance with aspects of the present disclosure. It can be seen in FIGS. 1 and 2 that the cover 20 includes a front cover portion 22, a door 24, and a top cover portion 26. In the example shown in FIG. 2, the charger port 29 of the vehicle 10 is covered by the door 24 of the cover 20, which is transparently shown in FIG. 2. When charging of the battery system 16 is to be performed, an operator raises the door 24 and connects an external charging device to the charger port 29. In accordance with aspects described herein, the cover 20 is formed from multiple distinct components, pieces, and/or structures that are formed, assembled, and attached together (generally as shown with a configuration similar to that depicted in FIG. 2). For example, the front cover portion 22, the door 24, and the top cover portion 26 can be separate and distinct components that are attached together to form the cover 20. It should be noted that any of the designs disclosed herein can be incorporated in place of the cover 20 shown in FIGS. 1 and 2, which is depicted for explanation purposes.

Looking still at FIG. 2, it can be seen that the cover 20 is designed to be attached to the vehicle 10 such that the cover 20 encloses and shields the charger port 29 from exposure to weather, debris, and impact forces, among other things. In the example shown in FIG. 2, the cover 20 is attached to a frame 23 of the vehicle 10 via a vertical bracket 25 and fasteners (e.g., bolts, screws, rivets, pins, and the like). In the example shown in FIG. 2, the cover 20 is also attached to a bracket 27 used to support the charging unit 18 (not shown in FIG. 2) of the vehicle 10. It should be understood that the particular components that the cover 20 is attached to for support can vary depending on the particular design of the vehicle 10 and location of the charging unit 18 and battery system 16, and the configuration shown in FIG. 2 is provided as one non-limiting example.

In some aspects, the cover 20 can include a visual indicator on the top cover portion 26 that is configured to provide a visual indication to an operator that the charger port 29 is connected to an external charging device. For example, the visual indicator can illuminate, blink, change color, etc., to attract an operator's attention when an external charging device is coupled to the charger port 29. Suitable examples of structures or devices that may serve as or provide the visual indicator include, but are not limited to, one or more light-emitting diodes (LEDs), organic light-emitting diodes (OLEDs), electroluminescent panels, backlit icons, illuminated rings or bands positioned around the charger port, or illuminated display screens integrated into the top cover portion 26. The visual indicator may be configured as a discrete light source, such as an LED mounted adjacent to or within the top cover portion 26, or as a distributed lighting element, such as a light guide or fiber optic element that emits light along a portion of the cover. In some examples, the visual indicator may be integrated into a transparent or translucent window or lens formed in the top cover portion 26, such that the indicator is visible to an operator when activated. The visual indicator may be controlled by a sensor or control circuit that detects when the charger port 29 is electrically connected to an external charging device, and may be configured to provide different visual signals (e.g., steady illumination, flashing, or color changes) to indicate various charging states, such as charging in progress, charging complete, or fault conditions.

It should be understood that a different type of indicator that provides an audio indication or audiovisual indication could also be incorporated into the cover 20 in addition to, or instead of, the visual indicator in the aspects described herein. Suitable examples of structures or devices that may serve as or provide the audio indication or audiovisual indication include, but are not limited to, one or more speakers, piezoelectric buzzers, sound transducers, or electronic chimes integrated into or mounted adjacent to the cover 20. The audio indicator may be configured to emit a tone, beep, chime, or synthesized voice message in response to a detected charging event, such as connection or disconnection of an external charging device, completion of charging, or detection of a fault condition. In some aspects, the audio indicator may be controlled by a sensor or control circuit that monitors the status of the charger port 29 and generates distinct audio signals corresponding to different operational states. For audiovisual indications, the system may combine the aforementioned audio devices with visual indicators, such as synchronized illumination of LEDs or display screens, to provide coordinated light and sound cues to the operator. The audiovisual indicator may be configured to deliver simultaneous or sequential audio and visual notifications to enhance user awareness and facilitate safe and effective operation of the charging system.

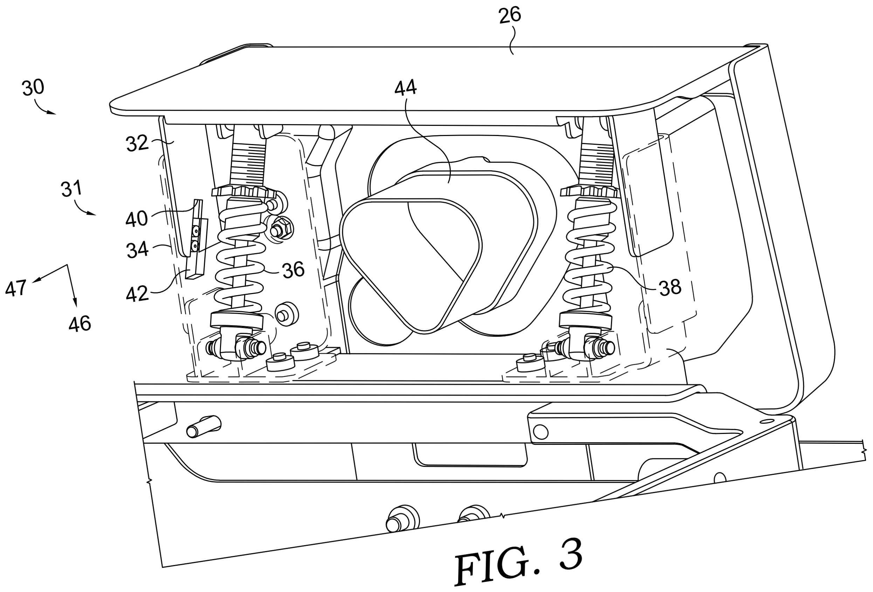

Looking now at FIG. 3, an example impact absorption system 30 e.g., that can be used with the cover 20 depicted in FIGS. 1 and 2, is shown, in accordance with aspects of the present disclosure. For the purposes of explanation, the cover 20, and the impact absorption system 30, are described as being used for enclosing a charger port, e.g., that can be similar to the charger port 29 shown in FIG. 2. However, the impact absorption system 30 described herein can also be used to protect numerous other structures, systems, and components that are housed within a cover. For example, this can include an electronics sub-assembly, a fuse box, a user-interface, a control module, or other components, systems, or assemblies.

The impact absorption system 30 includes the top cover portion 26 and an impact absorption mechanism 31. The impact absorption system 30 is configured to help absorb, dissipate, and/or distribute loads or forces imparted on the top cover portion 26. In aspects, the top cover portion 26 can be a panel, plate, sheet, or other substantially continuous surface. In aspects, the top cover portion 26 can be one that has a planar geometry or one that has a nonplanar or dimensional geometry. In aspects, the top cover portion 26 can be formed of a plastic material, a metal, a composite material, or another material. In some aspects, the top cover portion 26 can be reinforced using sheet metal or another stiffening component to increase a rigidity of the top cover portion 26. The top cover portion 26 may additionally include material or surface features, which reduce the risk of an operator falling if stepping on the top cover portion 26.

The impact absorption mechanism 31 includes brackets 32 that are coupled to the bottom side of the top cover portion 26 such that a portion of the brackets 32 are extending downward and away from the bottom side of the top cover portion 26. The impact absorption mechanism 31 also includes brackets 34 that are configured to be coupled to a structure and extend toward the bottom side of the top cover portion 26. In the example shown in FIG. 3, the brackets 34 are coupled to the vertical bracket 25 that is coupled to the frame 23 and the bracket 27 of the vehicle 10. The brackets 32 and 34 can be coupled to other components using fasteners (e.g., bolts, screws, rivets, pins, and the like). It should be understood that the particular structure that the brackets 34 are coupled to can vary depending on the particular features of the vehicle 10. The brackets 32 and the brackets 34 are positioned on either side of the top cover portion 26 and are separated by a distance that accommodates a charger port 44 extending between brackets 32 and 34 and that accommodates other components of the impact absorption mechanism 31.

In accordance with aspects herein, and as depicted in FIG. 3, the top cover portion 26 and at least a portion of the impact absorption mechanism 31 are designed to move vertically and horizontally when a force or load is applied to the top side of the top cover portion 26. For example, if an operator steps on the top side of the top cover portion 26, the top cover portion 26 and at least a portion of the impact absorption mechanism 31 can shift vertically, e.g., downward along direction 46, as well as shift horizontally, e.g., backward along direction 47, in response. This movement is enabled to help dissipate loads or forces on the top cover portion 26, which can otherwise contribute to degradation of one or more parts of the vehicle 10 such as the top cover portion 26.

In order to help guide the movement of the top cover portion 26 of the impact absorption system 30 during use, each of the brackets 32 includes a respective channel 40 that is configured to receive a respective block 42 of a corresponding bracket 34. The blocks 42 are configured to traverse within the channels 40 during movement of the top cover portion 26 and guide the movement of the top cover portion 26. The length of the channel 40 corresponds to a threshold distance that the top cover portion 26 can move without contacting and thus potentially degrading the charger port. To state it differently, the channel 40 and the block 42 together act as a stopper to help limit additional downward movement of the top cover portion 26 beyond the threshold distance and to help limit undesired rotation of the top cover portion 26. In the example shown in FIGS. 3-4, the channels 40 have a substantially rectangular shape, and the blocks have a trapezoidal shaped cross-section. It should be understood that the channels 40 and blocks 42 could also have different shapes so long as the blocks 42 can traverse within the channels 40 during movement of the top cover portion 26 and facilitate and control the movement of the top cover portion 26. Suitable examples of block 42 include, but are not limited to, any protruding or movable element, such as a pin, roller, body member, or sliding insert, that is configured to traverse within a corresponding channel 42, which includes but it not limited to a slot, groove, track, or guideway formed in a bracket or structural member, to guide and limit the movement of the top cover portion 26.

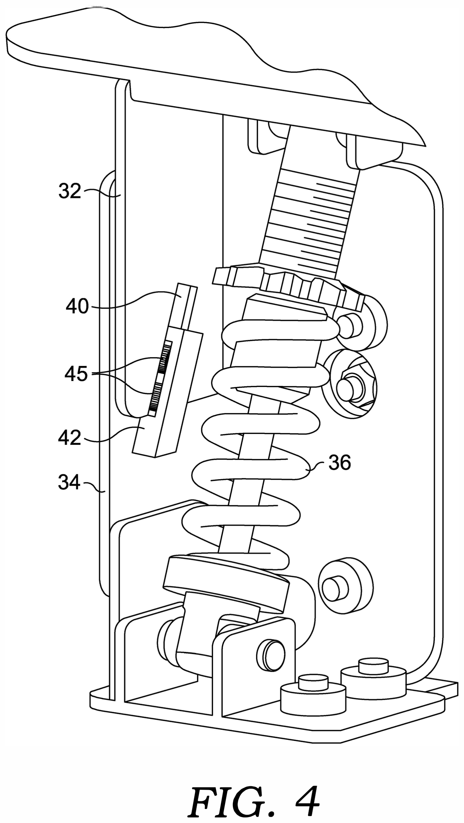

In the example shown in FIG. 3, and as can be seen more clearly in FIG. 4, the channels 40 and the blocks 42 are angled in a diagonal manner. Given the angled shape of the channels 40 and blocks 42, the top cover portion 26 in the example shown in FIG. 3 can thus shift both vertically, e.g., downward in direction 46, as well as horizontally, e.g., backward in direction 47, in response to a load or force on the top cover portion 26. This dynamic movement can help provide additional sensory feedback to an operator indicating that they have stepped on a cover of the charger port 44 rather than on, e.g., one of the steps 28 of the vehicle 10.

In aspects, at least one of the blocks 42 can include a sliding mechanism 45 to help reduce wear and/or degradation of the channels 40 and the blocks 42. In the example shown in FIG. 4, the sliding mechanism 45 is depicted as being one or more wheels embedded within or supported on the block 42. In some such examples, the wheels are formed of metal or another material that has a higher resistance to wear and degradation, e.g., than other components of the impact absorption system 30. This can help limit the need for service to replace the wheels at a high frequency.

The ability of the top cover portion 26 to shift and/or rotate between a first position and a second position through operation of the impact absorption system 30 can help dissipate the forces or loads that may be applied to the top cover portion 26 during use. In order to further control the movement of the top cover portion 26 coupled to the impact absorption system 30 and further limit and dissipate forces and loads applied to the top cover portion 26, the impact absorption mechanism 31 includes shock absorbers 36 and 38 that are coupled to, and extend between, the brackets 32 and 34. The shock absorbers 36 and 38 are configured to compress and absorb forces on the top cover portion 26, e.g., those associated with an operator stepping on the top cover portion 26. For example, the shock absorbers 36 and 38 can be tuned to absorb a range of forces from operators based on a range of weight of the operators, a maximum weight of operators, or the like.

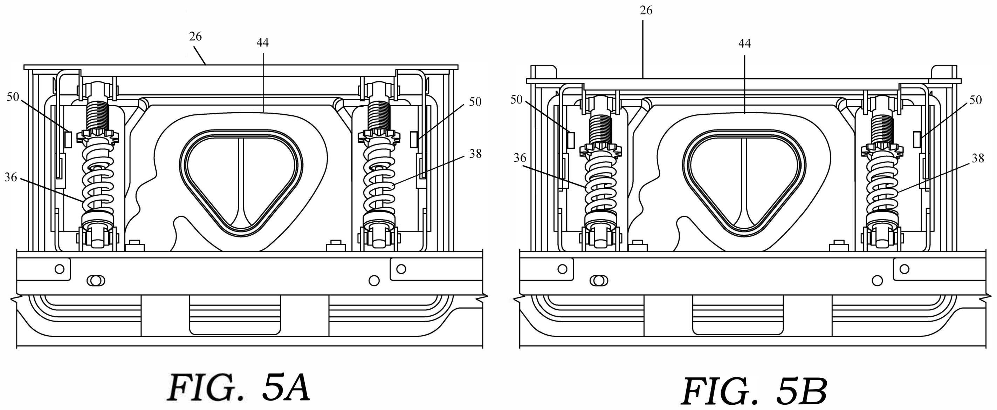

In the aspects described herein, the top cover portion 26 and at least a portion of the impact absorption mechanism 31 are configured to move vertically, e.g., as in reference to the vertical axis 9 in FIG. 1 and horizontally, e.g., as in reference to the transverse axis 7 in FIG. 1, in response to a load or force on the top surface of the top cover portion 26, and the shock absorbers 36 and 38 can additionally operate to reduce the immediate load effect and transfer the load or impact more uniformly and slowly onto the brackets 32 and 34 and the brackets 25 and 27 shown in FIG. 2. Once the forces on the top cover portion 26 are removed, the shock absorbers 36 and 38 can push the top cover portion 26 back to its resting or static position. FIGS. 5A-5B show the top cover portion 26 at its resting position (FIG. 5A) and at a position where the top cover portion 26 has shifted a threshold distance (FIG. 5B) as discussed above. In aspects, the range of displacement can be selected based on a geometry of the components and an operational range of integrated shock-absorbers or based on other factors. For example, in some aspects, a range of displacement of between about 1-10 centimeters for a top cover portion can be provided.

In aspects, the impact absorption system 30 further includes one or more sensors 50 configured to indicate when the top cover portion 26 has shifted a threshold distance of movement. Suitable examples of sensor 50 include, but are not limited to, position sensors (such as limit switches, Hall effect sensors, or optical encoders), touch sensors (such as capacitive or resistive touch sensors), force sensors, or proximity sensors, each configured to detect movement or displacement of the top cover portion and provide a corresponding output signal. In some aspects, the sensor 50 is a position sensor that is configured to provide a visual and/or audio notification in response to the position of the top cover portion 26 reaching a particular position, e.g., the position shown in FIG. 5B as one example. In some aspects, the sensor 50 is a touch sensor that is configured to provide a visual indication, audio indication, and/or an audiovisual indication in response to contact. The touch sensor can be positioned, e.g., on the top of the block 42 or on the bottom side of the top of the channel 40 such that the visual and/or audio notification is provided when the top of the block 42 contacts the bottom side of the top of the channel 40. In aspects, the notification is provided to help alert the operator that they should reposition a foot/load from the top cover portion 26 to another structure.

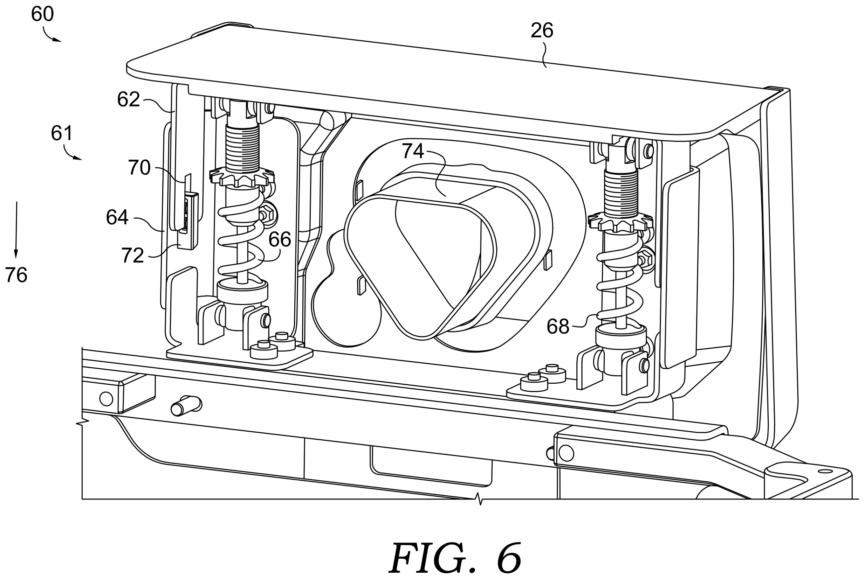

Looking now at FIGS. 6-7, another example impact absorption system 60, e.g., that can be implemented with the cover 20 in FIG. 1, is shown, in accordance with aspects of the present disclosure. For the purposes of explanation, the cover 20, and the impact absorption system 60, are described as enclosing a charger port, e.g., that can be similar to the charger port 29 shown in FIG. 2. However, the impact absorption system 60 described herein can also be used to protect and enclose numerous other structures, systems, and components that are housed within a cover.

In aspects, various features of the impact absorption system 60 can be similar to the features of the impact absorption system 30 described above with respect to FIGS. 3-4, and thus features of the impact absorption system 60 are numbered herein similarly but start with "6" or "7" rather than starting with a "3" or "4" for this purpose. The description of FIGS. 6-7 will focus on the differences of the impact absorption system 60 compared to the impact absorption system 30 discussed above.

In the example shown in FIG. 6, the top cover portion 26 and at least a portion of the impact absorption mechanism 61 are designed to move vertically, e.g., downward in a direction 76 as shown in FIG. 6, when there is a force or load applied to the top side of the top cover portion 26. For example, if an operator steps on the top side of the top cover portion 26, the top cover portion 26 and the impact absorption mechanism 61 can displace downward vertically in response. This movement is enabled to help dissipate immediate load impact on the top cover portion 26 that may otherwise cause degradation of the components.

To help guide the movement of the top cover portion 26 of the impact absorption system 60, each of the brackets 62 includes a respective channel 70 that is configured to receive a respective block 72 of a corresponding bracket 64. The blocks 72 are configured to traverse within the channels 70 during movement of the top cover portion 26 and help guide the movement of the top cover portion 26. The length of the channel 70 corresponds to a threshold distance that the top cover portion 26 can displace while at the same time limiting the potential for impacting or disrupting the components of the charger port 74. To state it differently, the channel 70 and the block 72 can together act as a stopper to help limit additional displacement of the top cover portion 26 once the top cover portion 26 has shifted a threshold distance and help limit undesired rotation of the top cover portion 26.

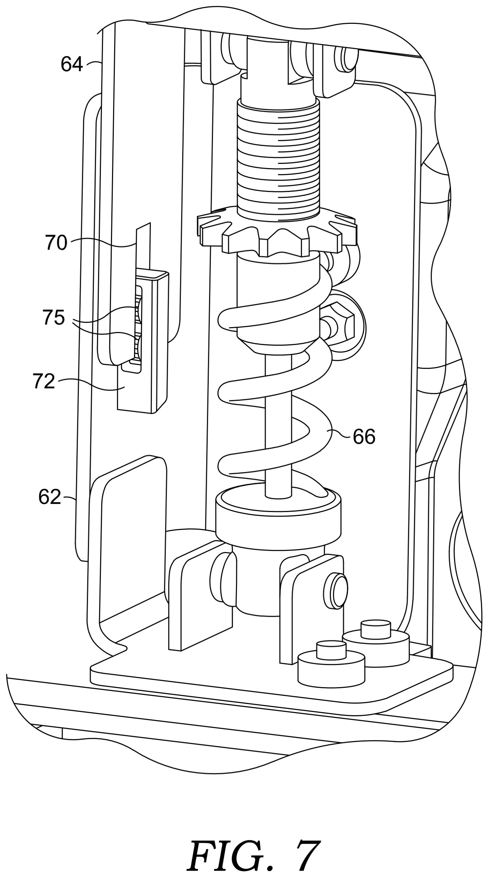

In the example shown in FIGS. 6-7, and as can be seen clearly in FIG. 7, the channels 70 and the blocks 72 can be substantially straight and can extend in a manner that is substantially perpendicular to the top surface of the top cover portion 26. Accordingly, the impact absorbers 66 and 68 can also extend in a manner that is substantially perpendicular to the top surface of the top cover portion 26. In the example shown in FIGS. 6-7, the channels 70 have a substantially rectangular shape, and the blocks 72 also have a rectangular-shaped cross-section. It should be understood that the channels 70 and blocks 72 could also have different shapes so long as the blocks 72 can traverse within the channels 70 during movement of the top cover portion 26 and facilitate and control the vertical movement of the top cover portion 26.

Given the shape and orientation of the channels 70 and blocks 72, the top cover portion 26 in the example shown in FIG. 6 can shift vertically, e.g., downward along the direction 76, in response to a force or load on the top cover portion 26. However, based on orientation the top cover portion 26 may substantially not move horizontally as described above with respect to the impact absorption system 30. This design may not provide the same degree of feedback to an operator stepping on the top cover portion 26 as the design discussed above with respect to FIGS. 3-4 (related to the combined vertical and horizontal movement). However, the operator will still have sensory feedback that they have stepped on a cover 20 of the charger port 74 rather than on, e.g., one of the steps 28 of the vehicle 10 because the steps 28 may not shift in a similar fashion, and in addition, the configuration shown in FIG. 6 can be implemented with a smaller profile due to displacement occurring substantially along only one axis rather than along perpendicular axes. This can help limit the space needed to accommodate the impact absorption system 60 in and around a charger port 74.

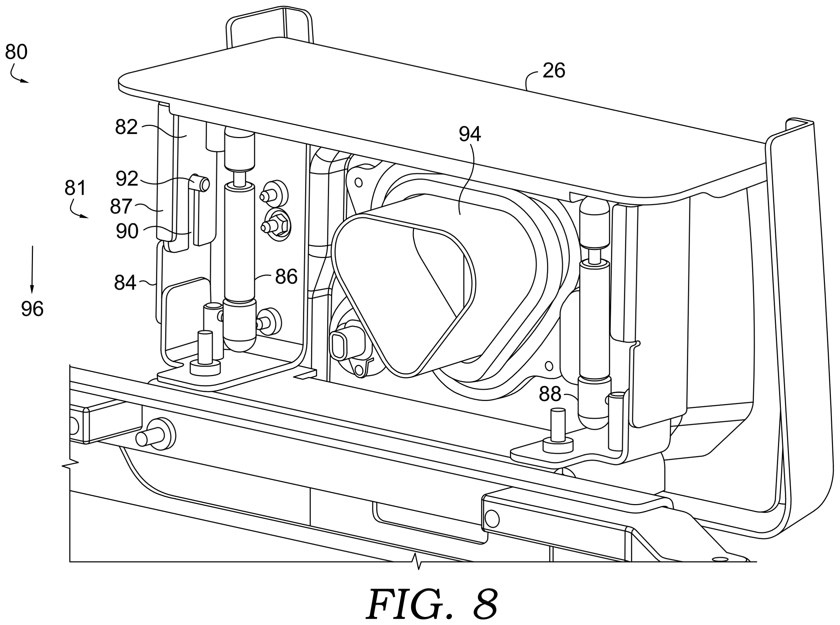

Looking now at FIGS. 8-9, another example impact absorption system 80, e.g., that can be used with the cover 20 of FIG. 1, is shown, in accordance with aspects of the present disclosure. For the purposes of explanation, the cover 20, and the impact absorption system 80, are described as providing protection for a charger port, e.g., that can be similar to the charger port 29 shown in FIG. 2. However, the impact absorption system 80 described herein can also be used to protect numerous other structures, systems, and components that are housed within a cover.

In aspects, various features of the impact absorption system 80 can be similar to the features of the impact absorption systems 30 and 60 described above with respect to FIGS. 3-7, and thus features of the impact absorption system 80 are numbered similarly but start with "8" or "9" for this purpose. The description of FIGS. 8-9 will focus on the differences of the impact absorption system 80 compared to the impact absorption systems 30 and 60 discussed above.

The top cover portion 26 and at least a portion of the impact absorption mechanism 81 are configured to shift vertically, e.g., downward along a direction 96, when a force or load is applied to the top side of the top cover portion 26. For example, if an operator steps on the top side of the top cover portion 26, the top cover portion 26 can shift vertically downward in response. This movement is enabled to help dissipate immediate load impact on the top cover portion 26 that may otherwise cause degradation of the components.

In order to control the displacement of the top cover portion 26 of the impact absorption system 80, each of the brackets 82 includes a respective channel 90 that is configured to receive a respective round block 92 of a corresponding bracket 84. The round blocks 92 are configured to traverse within the channels 90 during movement of the top cover portion 26 and help guide the movement of the top cover portion 26. The length of the channel 90 corresponds to a threshold distance that the top cover portion 26 can displace while at the same time limiting the potential for impacting or disrupting the components of the charger port 94. To state it differently, the channel 90 and the round block 92 can together act as a stopper to limit additional displacement of the top cover portion 26 once the top cover portion 26 has shifted a threshold distance. Further, in the examples shown in FIGS. 8-9, the brackets 84 include a lip 87 that is configured to limit horizontal movement and rotation of the top cover portion 26 while it is shifted vertically.

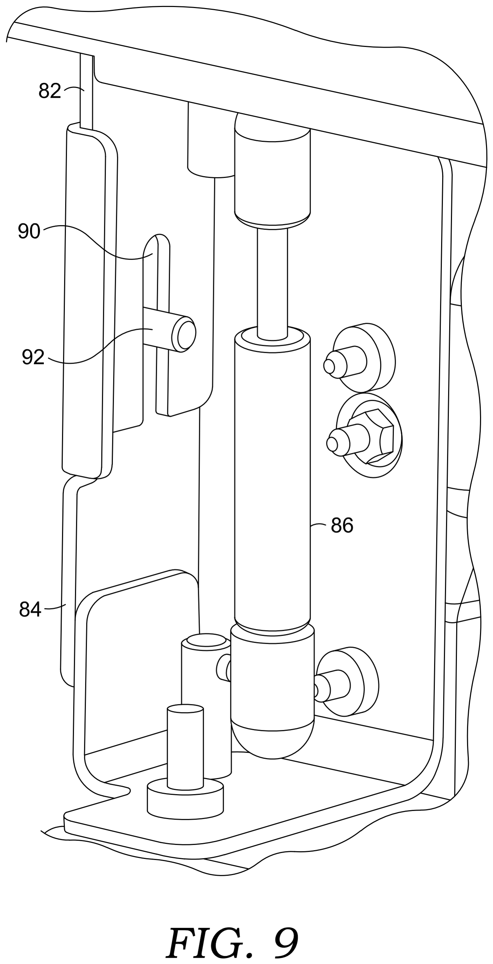

In the example shown in FIGS. 8-9, and as can be seen most clearly in FIG. 9, the channels 90 can be substantially straight and extend in a manner that is substantially perpendicular to the top surface of the top cover portion 26. The round blocks 92 extend outwardly from the brackets 84 in a manner that is substantially parallel to the top surface of the top cover portion 26. In the example shown in FIGS. 8-9, the channels 90 have a rounded top end to accommodate the shape of the round blocks 92 that have a circular shaped cross-section. It should be understood that the channels 90 and round blocks 92 could also have different shapes so long as the round blocks 92 can traverse within the channels 90 during movement of the top cover portion 26 and facilitate and control the vertical movement of the top cover portion 26.

Given the shape and orientation of the channels 90 and round blocks 92, the top cover portion 26 and at least a portion of the impact absorption mechanism 81 in the example shown in FIG. 8 can shift vertically, e.g., downward along a direction 96, in response to a force or load on the top cover portion 26, but the top cover portion 26 may substantially not shift horizontally as described above with respect to the impact absorption system 30. While this design does not provide as much feedback to the operator stepping on the top cover portion 26 as the design discussed above with respect to FIGS. 3-4, the operator will still have sensory feedback that they have stepped on a cover of the charger port 94 rather than on, e.g., one of the steps 28 because the steps 28 may not shift in a similar fashion, and in addition, the configuration shown in FIG. 9 can be implemented with a smaller profile due to displacement occurring substantially along only one axis rather than along perpendicular axes. This can help limit the space needed to accommodate the impact absorption system 80 in and around a charger port 94.

In order to further control the movement of the top cover portion 26 of the impact absorption system 80 and thus even further limit potential degradation of the components therein, the impact absorption mechanism 81 can include gas springs 86 and 88 as shown in the examples of FIGS. 8 and 9 that are coupled to, and extend between, the brackets 82 and 84. The gas springs 86 and 88 are configured to compress and absorb loads and forces associated with an operator stepping on the top cover portion 26. For example, the gas springs 86 and 88 can be tuned to absorb a range of impacts from operators based on a range of weight of the operators, a maximum weight of operators, or the like.

In the aspects described herein, the top cover portion 26 is configured to shift or displace vertically in response to a load or force on the top surface of the top cover portion 26, and in turn, the gas springs 86 and 88 can help reduce the immediate load effect and transfer the force or impact more uniformly and slowly onto the brackets 82 and 84 and the brackets 25 and 27 shown in FIG. 2. Once the load is removed from the top cover portion 26, the gas springs 86 and 88 are configured to push the top cover portion 26 back to its resting position.

While the aspects of the impact absorption systems described herein can incorporate shock-absorber devices or spring devices, it should be understood that these particular types of components could be replaced with other components that absorb, dissipate, and/or distribute at least some of a load or force applied to the top cover portion 26. For example, damper devices (e.g., hydraulic dampers, pneumatic dampers, elastomeric dampers, or friction dampers), air suspension devices (e.g., air springs, air bladders, or pneumatic cylinders), or other similar devices can be included in the impact absorption systems. Further, it should be understood that the particular combination of the impact absorption systems described can be interchanged, e.g., the channels 70 and blocks 72 shown in FIGS. 6-7 can be used with the gas springs 86 and 88 shown in FIGS. 8-9, or modified.

By using the impact absorption systems described herein to help absorb, dissipate, and/or distribute a portion of a force or load applied to a cover of a charger port, e.g., when an operator steps on the cover, the likelihood of the cover, the charger port, the charging unit, and/or other components of a vehicle being degraded is reduced. This, in turn, can help reduce the frequency of maintenance, repairs, or replacement of components and thus also help increase the operational lifecycle of the components, among other benefits.

Clause 1. A vehicle with an electric powertrain, the vehicle comprising: a chassis; a battery system attached to the chassis; a charging unit coupled to the battery system, wherein the charging unit is coupled to a charger port configured to receive an external charging device; and a cover that includes an impact absorption system, the impact absorption system comprising: a top cover portion having a first side and a second side; and an impact absorption mechanism coupled to the first side of the top cover portion, wherein the top cover portion and at least a portion of the impact absorption mechanism are configured to shift at least partially in a first direction in response to a load applied to the second side of the top cover portion.

Clause 2. The vehicle of clause 1, wherein the impact absorption mechanism comprises at least one shock absorber, spring, damper, and/or air suspension device.

Clause 3. The vehicle of any of clauses 1-2, wherein the charger port and the cover are positioned proximate to a step of the vehicle.

Clause 4. The vehicle of any of clauses 1-3, further comprising an indicator configured to provide an audio indication or a visual indication once the top cover portion has shifted a threshold distance in the first direction.

Clause 5. The vehicle of any of clauses 1-4, further comprising a visual indicator on the second side of the top cover portion to indicate that the external charging device is coupled to the charger port.

Clause 6. The vehicle of any of clauses 1-5, wherein the impact absorption system is configured to limit movement of the top cover portion beyond a threshold distance in the first direction.

Clause 7. The vehicle of any of clauses 1-6, wherein the impact absorption system is configured to limit rotation of the top cover portion when the load is applied to the second side of the top cover portion.

Clause 8. A cover for a charger port, comprising: a top cover portion configured to cover at least a first part of the charger port, wherein the top cover portion comprises a first side and a second side; a second portion comprising a frame structure and a door, wherein the second portion is configured to cover at least a second part of the charger port; and an impact absorption mechanism coupled to the first side of the top cover portion, wherein the top cover portion and at least a portion of the impact absorption mechanism are configured to shift at least partially in a first direction in response to a load applied to the second side of the top cover portion.

Clause 9. The cover of clause 8, wherein the impact absorption mechanism comprises at least one shock absorber, spring, damper, and/or air suspension device.

Clause 10. The cover of any of clauses 8-9, wherein the impact absorption mechanism comprises: a first plurality of brackets configured to be coupled to a vehicle, wherein each of the first plurality of brackets comprises a respective block; and a second plurality of brackets coupled to the first side of the top cover portion, wherein each of the second plurality of brackets comprises a respective channel configured to receive the respective block of one of the first plurality of brackets, wherein each respective block is configured to traverse the respective channel during movement of the top cover portion and the impact absorption mechanism.

Clause 11. The cover of clause 10, wherein each respective channel of the second plurality of brackets is angled and causes the top cover portion to shift in the first direction and in a second direction in response to the load applied to the top cover portion.

Clause 12. The cover of clause 10, wherein each respective channel of the second plurality of brackets is substantially straight and causes the top cover portion to move substantially in the first direction in response to the load applied to the top cover portion.

Clause 13. The cover of clause 10, wherein each respective channel has a length that corresponds to a threshold distance of movement by the top cover portion in the first direction, wherein the respective channels and the respective blocks limit the top cover portion from moving in the first direction beyond the threshold distance of movement.

Clause 14. The cover of any of clauses 8-14, further comprising a sensor configured to indicate when the top cover portion has shifted a threshold distance in the first direction.

Clause 15. An impact absorption system for a charger port, comprising: a top cover portion comprising a first side and a second side, wherein the top cover portion is configured to cover at least a first part of the charger port; and an impact absorption mechanism coupled to the first side of the top cover portion, wherein the top cover portion and at least a portion of the impact absorption mechanism are configured to shift at least partially in a first direction in response to a load applied to the second side of the top cover portion.

Clause 16. The impact absorption system of clause 15, wherein the impact absorption mechanism comprises at least one shock absorber, spring, damper, and/or air suspension device.

Clause 17. The impact absorption system of any of clauses 15-16, further comprising: a first plurality of brackets configured to be coupled to a vehicle, wherein each of the first plurality of brackets comprises a respective block; and a second plurality of brackets coupled to the first side of the top cover portion, wherein each of the second plurality of brackets comprises a respective channel configured to receive the respective block of one of the first plurality of brackets, wherein the impact absorption mechanism is coupled to the first plurality of brackets and the second plurality of brackets, and wherein the respective blocks are configured to traverse the respective channels during shifting of the top cover portion and the impact absorption mechanism.

Clause 18. The impact absorption system of clause 17, wherein each respective channel of the second plurality of brackets is angled and causes the top cover portion to shift in the first direction and in a second direction in response to the load applied to the top cover portion.

Clause 19. The impact absorption system of clause 18, wherein each respective channel of the second plurality of brackets is substantially straight and causes the top cover portion to move substantially in the first direction in response to the load applied to the top cover portion.

Clause 20. The impact absorption system of any of clauses 15-19, further comprising a sensor configured to indicate when the top cover portion has shifted a threshold distance in the first direction.

In some aspects, this disclosure may include the language, for example, "at least one of [element A] and [element B]." This language may refer to one or more of the elements. For example, "at least one of A and B" may refer to "A," "B," or "A and B." In other words, "at least one of A and B" may refer to "at least one of A and at least one of B," or "at least either of A or B." In some aspects, this disclosure may include the language, for example, "[element A], [element B], and/or [element C]." This language may refer to either of the elements or any combination thereof. In other words, "A, B, and/or C" may refer to "A," "B," "C," "A and B," "A and C," "B and C," or "A, B, and C." In addition, this disclosure may use the term "and/or" which may refer to any one or combination of the associated elements. In addition, this disclosure may refer to "a" element or "the" element. This language may refer to the referenced element in the singular or in the plural, and is not intended to be limiting in this respect.

The subject matter of this disclosure has been described in relation to particular aspects, which are intended in all respects to be illustrative rather than restrictive. In this sense, alternative aspects will become apparent to those of ordinary skill in the art to which the present subject matter pertains without departing from the scope hereof. In addition, different combinations and sub-combinations of elements disclosed, as well as use and inclusion of elements not shown, are possible and contemplated as well.

## Claims

1. A vehicle with an electric powertrain, comprising:
a chassis;
a battery system attached to the chassis;
a charging unit coupled to the battery system, wherein the charging unit is coupled to a charger port configured to receive an external charging device; and
a cover that includes an impact absorption system, the impact absorption system comprising:
a top cover portion having a first side and a second side; and
an impact absorption mechanism coupled to the first side of the top cover portion, wherein the top cover portion and at least a portion of the impact absorption mechanism are configured to shift at least partially in a first direction in response to a load applied to the second side of the top cover portion.

2. The vehicle of claim 1, wherein the impact absorption mechanism comprises at least one shock absorber, spring, damper, and/or air suspension device.

3. The vehicle of claim 1, wherein the charger port and the cover are positioned proximate to a step of the vehicle.

4. The vehicle of claim 1, further comprising an indicator configured to provide an audio indication or a visual indication once the top cover portion has shifted a threshold distance in the first direction.

5. The vehicle of claim 1, further comprising a visual indicator on the second side of the top cover portion to indicate that the external charging device is coupled to the charger port.

6. The vehicle of claim 1, wherein the impact absorption system is configured to limit movement of the top cover portion beyond a threshold distance in the first direction.

7. The vehicle of claim 1, wherein the impact absorption system is configured to limit rotation of the top cover portion when the load is applied to the second side of the top cover portion.

8. A cover for a charger port, comprising:
a top cover portion configured to cover at least a first part of the charger port, wherein the top cover portion comprises a first side and a second side; and
a second portion comprising a frame structure and a door, wherein the second portion is configured to cover at least a second part of the charger port; and an impact absorption mechanism coupled to the first side of the top cover portion, wherein the top cover portion and at least a portion of the impact absorption mechanism are configured to shift at least partially in a first direction in response to a load applied to the second side of the top cover portion.

9. The cover of claim 8, wherein the impact absorption mechanism comprises at least one shock absorber, spring, damper, and/or air suspension device.

10. The cover of claim 8, wherein the impact absorption mechanism comprises: a first plurality of brackets configured to be coupled to a vehicle, wherein:
each of the first plurality of brackets comprises a respective block; and
a second plurality of brackets coupled to the first side of the top cover portion, wherein each of the second plurality of brackets comprises a respective channel configured to receive the respective block of one of the first plurality of brackets, wherein each respective block is configured to traverse the respective channel during movement of the top cover portion and the impact absorption mechanism.

11. The cover of claim 10, wherein each respective channel of the second plurality of brackets is angled and causes the top cover portion to shift in the first direction and in a second direction in response to the load applied to the top cover portion.

12. The cover of claim 10, wherein each respective channel of the second plurality of brackets is substantially straight and causes the top cover portion to move substantially in the first direction in response to the load applied to the top cover portion.

13. The cover of claim 10, wherein each respective channel has a length that corresponds to a threshold distance of movement by the top cover portion in the first direction, wherein the respective channels and the respective blocks limit the top cover portion from moving in the first direction beyond the threshold distance of movement.

14. The cover of claim 8, further comprising a sensor configured to indicate when the top cover portion has shifted a threshold distance in the first direction.

15. An impact absorption system for a charger port, comprising:
a top cover portion comprising a first side and a second side, wherein the top cover portion is configured to cover at least a first part of the charger port; and an impact absorption mechanism coupled to the first side of the top cover portion, wherein the top cover portion and at least a portion of the impact absorption mechanism are configured to shift at least partially in a first direction in response to a load applied to the second side of the top cover portion.

16. The impact absorption system of claim 15, wherein the impact absorption mechanism comprises at least one shock absorber, spring, damper, and/or air suspension device.

17. The impact absorption system of claim 15, further comprising:
a first plurality of brackets configured to be coupled to a vehicle, wherein each of the first plurality of brackets comprises a respective block; and
a second plurality of brackets coupled to the first side of the top cover portion, wherein each of the second plurality of brackets comprises a respective channel configured to receive the respective block of one of the first plurality of brackets, wherein the impact absorption mechanism is coupled to the first plurality of brackets and the second plurality of brackets, and wherein the respective blocks are configured to traverse the respective channels during shifting of the top cover portion and the impact absorption mechanism.

18. The impact absorption system of claim 17, wherein each respective channel of the second plurality of brackets is angled and causes the top cover portion to shift in the first direction and in a second direction in response to the load applied to the top cover portion.

19. The impact absorption system of claim 18, wherein each respective channel of the second plurality of brackets is substantially straight and causes the top cover portion to move substantially in the first direction in response to the load applied to the top cover portion.

20. The impact absorption system of claim 15, further comprising a sensor configured to indicate when the top cover portion has shifted a threshold distance in the first direction.
